Europäisches Patentamt

European Patent Office

Office européen des brevets

(19)

(11) **EP 1 679 901 A2**

(12) # EUROPEAN PATENT APPLICATION

(43) Date of publication:
**12.07.2006 Bulletin 2006/28**

(51) Int Cl.:
*H04N 7/26* (2006.01)  *H04N 7/50* (2006.01)

(21) Application number: **06250034.3**

(22) Date of filing: **05.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.01.2005 KR 2005001801**

(71) Applicant: **Samsung Electronics Co., Ltd.**
**Suwon-si, Gyeonggi-Do (KR)**

(72) Inventors:
• **Song, Byung-cheol,**
  **106-1802 Dongsuwon LG Village**
  **Suwon-si**
  **Gyeonggi-do (KR)**
• **Chun, Kang-wook,**
  **106-502**
  **Hwaseong-si**
  **Gyeonggi-do (KR)**

(74) Representative: **Robinson, Ian Michael et al**
**Appleyard Lees,**
**15 Clare Road**
**Halifax HX1 2HY (GB)**

(54) **Method and apparatus for encoding and decoding moving images using a plurality of modified MF tables and recording medium storing program for tables and recording medium storing program for executing the method**

(57)     Methods of encoding and decoding moving images are provided in which noise from an input image is simultaneously encoded and removed. The method of encoding moving images includes selecting a modified multiplication factor table in block units in consideration of noise information of the input image, integer-transforming the input image, and quantizing the input image using the selected modified multiplication factor table. Consequently, the efficiency and performance of compressing moving images can be enhanced.

FIG. 9

EP 1 679 901 A2

**Description**

The present invention relates generally to a method and apparatus for encoding and decoding moving images, and more particularly, to enhancing the efficiency of encoding moving images.

In a particular embodiment, the present invention relates to a method and apparatus for effectively removing noise from an image distorted by noise when the image is input to a moving image encoder adopting H.264.

Recently, a Digital Versatile Disk (DVD) recorder and a set-top box which receive an analog terrestrial broadcast program and then encodes and store the received program using a data compression method such as Moving Pictures Experts Group 2 (MPEG2) or Moving Pictures Experts Group 4 (MPEG4) have been developed. Also, a Bluray Disc (BD) recorder for storing data decoded by using the H.264 method as well as the MPEG2 method has been developed.

However, in the case of a terrestrial broadcast, images arriving at a receiving terminal may be distorted due to channel noise. For example, white Gaussian noise may be contained in an entire image. If the image is compressed using the MPEG2 or H.264 method, the efficiency of compressing the image may be very low due to the influence of the white Gaussian noise.

Accordingly, much research has been conducted to remove noise from moving images. Conventional noise elimination methods include a spatial noise reduction method of reducing noise contained in two-dimensional space, and a temporal noise reduction method of reducing noise in a temporal axis direction. Conventional noise elimination methods also include a spatial-temporal noise reduction method, which is a combination of the spatial noise reduction method and the temporal noise reduction method.

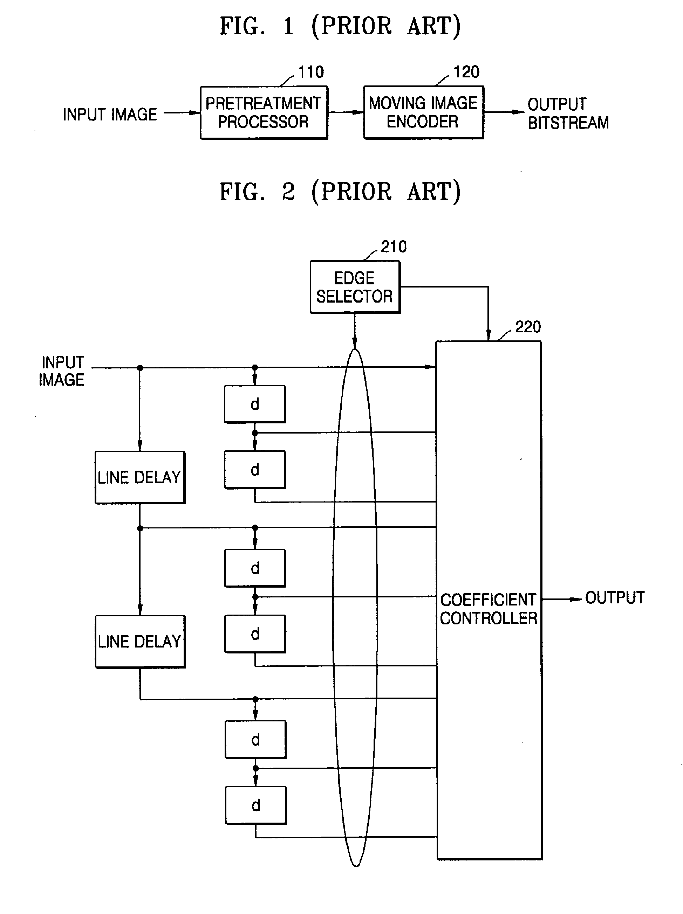

Figure 1 is a block diagram illustrating an apparatus for encoding moving images using a conventional noise elimination method. The apparatus includes a general moving image encoder 120 and a pretreatment processor 110. The pretreatment processor 110 eliminates noise from an input image using one of the conventional noise elimination methods and provides the input image without noise to the moving image encoder 120.

In general, the pretreatment processor 110 removes noise from an image by using the spatial noise reduction method, the temporal noise reduction method, or the spatial-temporal noise reduction method.

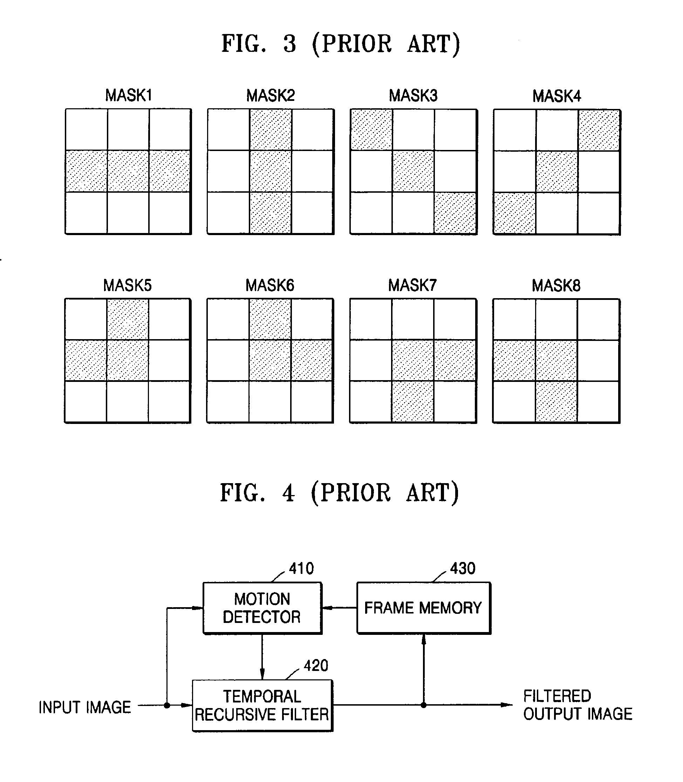

Figures 2 and 3 are views for illustrating the spatial noise reduction method. When the spatial noise reduction method is performed using a simple low pass filter having filtering coefficients of [121], edge blurring may occur. To reduce noise without causing edge blurring, a detail-preserving spatial noise reduction method, in which low-pass-filtering is performed by detecting a direction in units of blocks, for example, in units of 3 lines x 3 pixels, may be used. Figure 2 illustrates an example of the detail- preserving spatial noise reduction method.

Referring to Figure 2, an edge selector 210 performs high-pass filtering on eight spatial noise reduction filtering masks, shown in Figure 3, to obtain filtering outputs, and selects a filtering direction for obtaining the smallest filtering output with respect to each mask. A coefficient controller 220 performs low-pass filtering in the selected direction by adjusting low-pass filtering coefficients in the selected filtering direction. The greater the quantity of masks the edge selector 210 uses, the higher the precision of directional detection but the lower the noise reduction effect. On the contrary, the smaller the quantity of masks used, the higher the noise reduction effect but the higher the frequency of edge blurring.

Figure 4 is a block diagram illustrating the temporal noise reduction method. Referring to Figure 4, a motion detector 410 estimates motion and noise magnitude in a current image, based on an input image and a previous image stored in frame memory 430. If the motion detector 410 determines that a minor amount of motion and a major amount of noise are contained in the current image, a temporal recursive filter 420 performs low-pass filtering on the current image in the direction of a temporal axis. In contrast, if the motion detector 410 determines that a major amount of motion and a minor amount of noise are contained in the current image, the temporal recursive filter 420 outputs the current image without low-pass filtering. The temporal noise reduction method is effective in processing still images. An example of the temporal noise reduction method is disclosed in U.S. Patent No. 5,969,777.

However, even when an image is filtered using a conventional spatial noise reduction filter that sharpens the edge of the image, a blurring effect still occurs. Also, since the conventional temporal noise reduction filter is not appropriate for filtering moving images, excess noise still remains in the images.

According to the present invention there is provided an apparatus and method as set forth in the appended claims. Preferred features of the invention will be apparent from the dependent claims, and the description which follows.

The present invention provides a method and apparatus for encoding and decoding moving images, which are capable of enhancing the efficiency and performance of compressing moving images by filtering moving images to remove noise when encoding the moving images.

The present invention also provides a recording medium on which a program for executing the method of encoding and decoding moving images is recorded.

In one aspect, the present invention provides a method and apparatus of encoding moving images by adaptively selecting multiplication tables used in a quantization process in consideration of noise information of an image input to a moving image encoder.

According to an aspect of the present invention, there is provided a method of encoding moving images using a plurality of modified multiplication factor tables. The method includes: selecting one of the modified multiplication factor tables in predetermined block units in consideration of characteristics of an input image; integer-transforming the input image; and quantizing the integer-transformed input image using the selected modified multiplication factor table.

According to another aspect of the present invention, there is provided a method of decoding moving images using a plurality of modified multiplication factor tables. The method includes: carrying out variable length decoding on encoded image data; extracting index information indicating one of the modified multiplication factor tables from the variable-length-decoded image data in predetermined block units; selecting one of the modified multiplication factor tables based on the extracted index information; and inversely quantizing the variable-length-decoded image data in the predetermined block units by using the selected modified multiplication factor table.

According to another aspect of the present invention, there is provided an apparatus for encoding moving images using a plurality of modified multiplication factor tables. The apparatus includes: a modified multiplication factor table determination unit selecting one of the modified multiplication factor tables in predetermined block units in consideration of characteristics of an input image; an integer transform unit integer-transforming the input image; and a quantization unit quantizing the integer-transformed input image using the selected modified multiplication factor table.

According to another aspect of the present invention, there is provided an apparatus for decoding moving images using a plurality of modified multiplication factor tables. The apparatus includes: a variable length decoding unit carrying out variable length decoding on encoded image data and extracting index information indicating one of the modified multiplication factor tables from the variable-length-decoded image data in predetermined block units; a modified multiplication factor table storage unit storing the modified multiplication factor tables and selecting one of the modified multiplication factor tables based on the extracted index information; and an inverse quantization unit inversely quantizing the variable-length-decoded image data in the predetermined block units by using the selected modified multiplication factor table.

According to another aspect of the present invention, there is provided a computer-readable recording medium on which a program for executing a method of encoding moving images using a plurality of modified multiplication factor tables is recorded, the method including: selecting one of the modified multiplication factor tables in predetermined block units in consideration of characteristics of an input image; integer-transforming the input image; and quantizing the integer-transformed input image using the selected modified multiplication factor table.

According to another aspect of the present invention, there is provided a computer-readable recording medium on which a program for executing a method of decoding moving images using a plurality of modified multiplication factor tables is recorded, the method including: carrying out variable length decoding on encoded image data; extracting index information indicating one of the modified multiplication factor tables from the variable-length-decoded image data in predetermined block units; selecting one of the modified multiplication factor tables based on the extracted index information; and inversely quantizing the variable-length-decoded image data in the predetermined block units by using the selected modified multiplication factor table.

The above and other aspects of the present invention will become more apparent by describing in detail exemplary embodiments thereof with reference to the attached drawings in which:

Figure 1 is a block diagram illustrating an apparatus for encoding moving images using a conventional noise elimination method;

Figure 2 illustrates a spatial noise filter;

Figure 3 illustrates masks for the spatial noise filter of Figure 2;

Figure 4 is a block diagram illustrating a temporal noise reduction method;

Figure 5 is a block diagram of an approximated generalized Weiner filter processing image data whose average is not 0;

Figure 6 is a block diagram of an approximated generalized Weiner filter processing image data whose average is not 0 in an integer transform domain;

Figures 7A through 7C illustrate the structure of an encoding apparatus for processing an intra block;

Figure 8 illustrates a general video decoding apparatus for decoding an inter block;

Figure 9 is a block diagram of an apparatus for encoding moving images according to an exemplary embodiment of the present invention;

Figure 10 is a flowchart illustrating a method of encoding moving images according to an exemplary embodiment of the present invention;

Figure 11 illustrates an apparatus for decoding moving images according to an exemplary embodiment of the present invention; and

Figure 12 is a flowchart illustrating a method of decoding moving images according to an exemplary embodiment of the present invention.

The present invention will now be described more fully with reference to the accompanying drawings, in which exemplary embodiments of the invention are shown. The invention may, however, be embodied in many different forms and should not be construed as being limited to the exemplary embodiments set forth therein; rather, these exemplary embodiments are provided so that this disclosure will be thorough and complete, and will fully convey the concept of the invention to those skilled in the art.

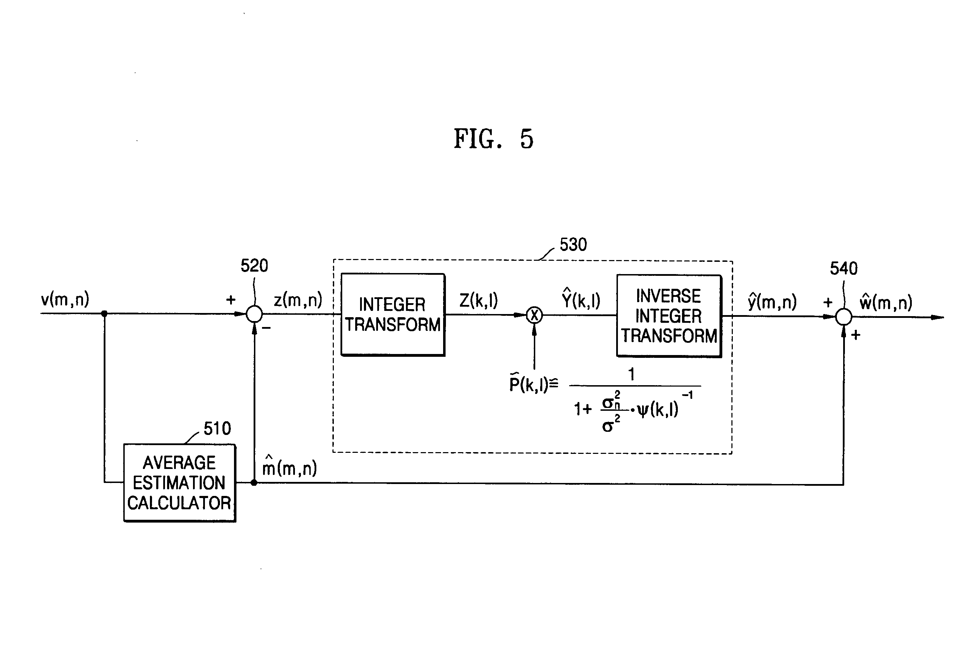

A method of encoding moving images according to the present invention will now be described with reference to Figures 5 through 9.

When encoding moving images, pre-treatment filtering is advantageous because it can increase the efficiency of encoding the moving images by removing noise from images. While a conventional pre-treatment filtering technique for removing noise from images is generally carried out in a spatial pixel block, a noise removal technique in the present invention is carried out in an integer transform domain in an apparatus for encoding moving images.

In the present invention, an approximated generalized Weiner filtering method is used for removing noise from images. In the approximated generalized Weiner filtering method, Weiner filtering is realized by taking advantage of a fast unitary transformation, such as an integer transform. However, a filtering method other than the approximated generalized Weiner filtering method may be used for carrying out filtering in the integer transform.

Figure 5 is a block diagram of an approximated generalized Weiner filter processing image data whose average is not 0.

In Figure 5, $v$ represents an image block containing noise, and $\widehat{w}$ represents a row-ordered column vector of a filtered image block. Since the average of the image block v is not 0, an average estimation unit 510 estimates an average of the image block v, and a subtraction unit 520 subtracts the estimated average from the image block v.

A value z, output from the subtraction unit 520 as a result of the subtraction, is filtered by a filtering unit 530, and the filtering unit 530 outputs filtered data as a result of the filtering. An addition unit 540 adds the estimated average of the image block $\widehat{m}$ (m,n) to the filtered data $\widehat{y}$ (m,n) and then outputs desirably filtered data as a result of the addition.

Hereinafter, an approximated generalized Weiner filtering method for processing an image model whose average is 0 will be described in greater detail.

When blurring is not present, generalized Wiener filtering method for processing an image model whose average is 0 can be expressed by Equation (1) below

$$\widehat{y} = A^{\bullet T}[AL\ A^{\bullet T}]Az = A^{\bullet T}\widetilde{L}Z \qquad \ldots \ (1),$$

wherein $\widetilde{L}$=AL $A^{*T}$, $L = [I + \sigma_n^2 R^{-1}]^{-1}$, $R$=E[y $y^T$], Z=Az, $\sigma_n^2$ denotes a noise variance, and A denotes unitary transformation. If the moving image encoder is an H.264 moving image encoder, an image is filtered using the integer transform. Thus, A can be understood as the integer transform. Also, $A=(C_4 \otimes C_4)$ where $C_4$ denotes a 4x4 integer transform matrix and $\otimes$ denotes a Kronecker multiplication operator.

In general, because $\widetilde{L}$ is approximately diagonalized in the unitary transformation, Equation (1) can be rearranged into Equation (2) below.

$$\widehat{y} = A^{\bullet T}\widehat{Y} \qquad \ldots \ (2),$$

wherein $\widehat{Y} = \tilde{L}Z \approx [Diag\ \tilde{L}]Z$.

When Equation (2) is applied to a 4x4 image block, the following equation is obtained:

$$\tilde{y}(k,l) \approx \tilde{p}(k,l)Z(k,l) \qquad \dots \ (3)$$

$\tilde{P}(k,l)$ may be expressed as follows:

$$\tilde{p}(k,l) \cong \cfrac{1}{1 + \cfrac{\sigma_n^2}{\sigma^2}\psi(k,l)^{-1}} \qquad \dots \ (4),$$

wherein $\psi(k,l)$ denotes normalized element values that are placed along a diagonal line of $AR\ A^{*T}$, and $\sigma^2$ denotes a variance of the original image y when noise is not present. In general, because $\sigma^2$ is an unknown value, it is replaced with a value, which is obtained by subtracting a noise variance from a variance z.

As shown in Equation (3), approximated generalized Weiner filtering is carried out on an image block whose average is 0 by multiplying two-dimensional integer transform coefficients by $\tilde{P}(k,l)$ . Once $\widehat{y}$ (m,n) is determined, a final, filtered image is obtained by adding $\widehat{m}$ (m, n) to $\widehat{y}$ (m, n).

Hereinafter, an approximated generalized Weiner filtering method for processing an image model whose average is not 0 will be described in greater detail.

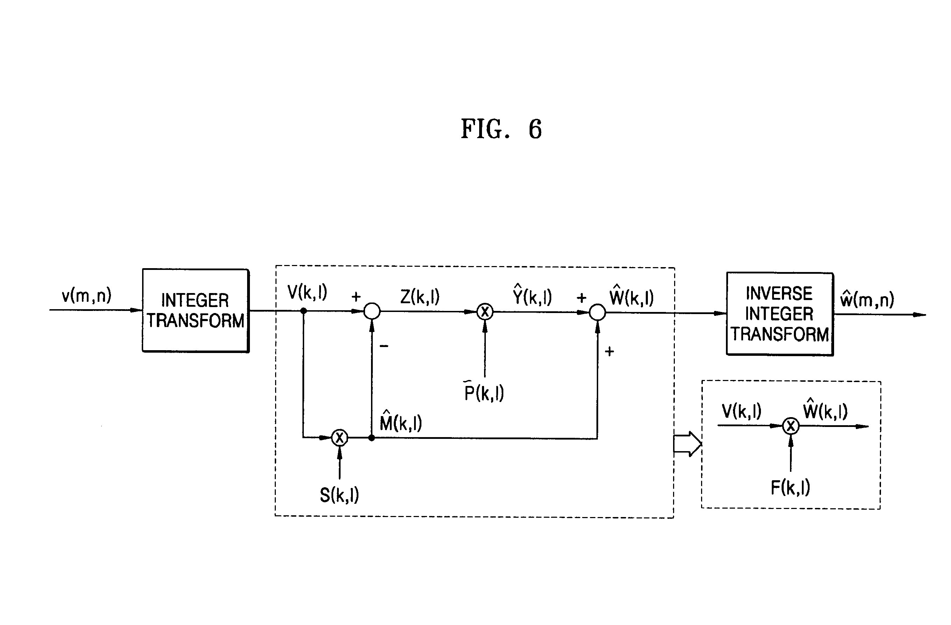

Let us assume that an average block is obtained by multiplying an input Discrete Cosine Transform (DCT) block containing noise by $S\ (k, l)$ , i.e., the average block satisfies Equation (5) below. Then, the approximated generalized Weiner filter of Figure 5, which carries out addition and subtraction in the integer transform domain, can be restructured into an approximated generalized Weiner filter of Figure 6.

$$\hat{M}(k,l) = S(k,l).V(k,l) \qquad \dots \ (5)$$

By using Equations (3) and (5), an image block filtered in the integer transform domain can be represented by Equation (6) below.

$$\hat{W}(k,l) = \hat{Y}(k,l) + \hat{M}(k,l) = (\tilde{p}(k,l)\cdot(1-S(k,l)) + S(k,l))\cdot V(k,l) \qquad \cdots(6)$$
$$= F(k,l)\cdot V(k,l)$$

$F(k,1)$ in Equation (6) can be expressed by Equation (7) below.

$$F(k,l) = \hat{p}(k,l)\bullet(1-S(k,l)) + S(k,l) = \cfrac{1 + S(k,l)\bullet\cfrac{\sigma_n^2}{\sigma^2}\cdot\cfrac{1}{\psi(k,l)}}{1 + \cfrac{\sigma_n^2}{\sigma^2}\bullet\cfrac{1}{\psi(k,l)}} \qquad (7)$$

As shown in Equation (6), the entire filtering process can be simplified into a multiplication of F(k, *1)*. Equation (7) shows that F(k, *1)* is determined by a signal-to-noise ratio (SNR), a covariance matrix Ψ*(k,1),* and an average matrix *S (k, 1)* .

In order to determine an average matrix S(k, *1)* in the present embodiment, among possible candidates for the average matrix S(k, *1),* the one that satisfies Equation (5) is selected. The average matrix *S(k, 1)* can be represented by Equation (8) below.

$$S(k,l) = \begin{bmatrix} 1000 \\ 0000 \\ 0000 \\ 0000 \end{bmatrix} \qquad \dots \quad (8)$$

Equation (8) shows one of the simplest forms that the average matrix S(k, 1) could take in the integer transform block.

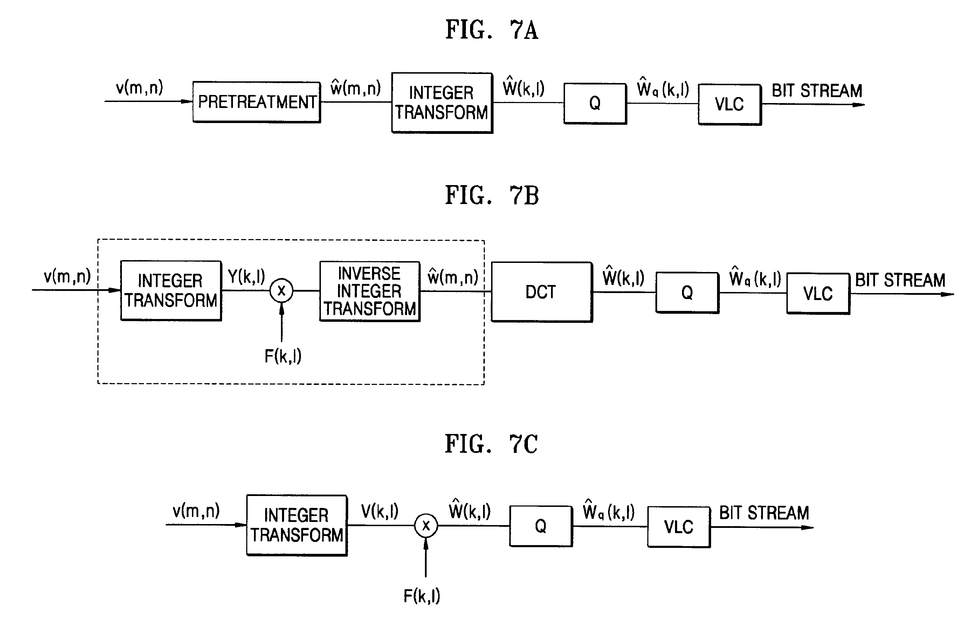

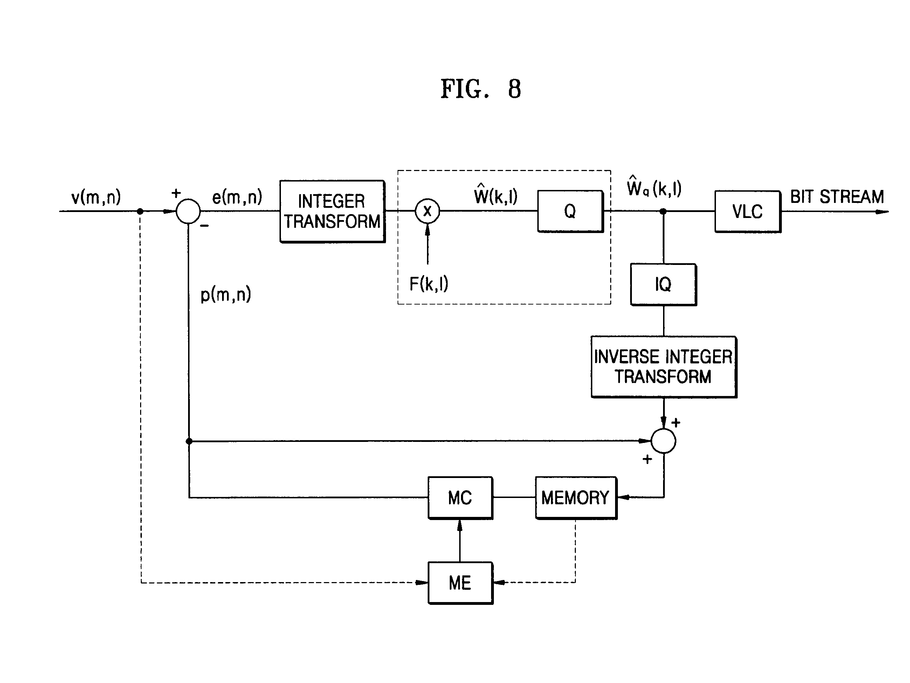

Hereinafter, a pretreatment process performed in an apparatus for encoding moving images will be described in greater detail with reference to Figures 7A through 7C and 8.

As described above, an approximated generalized Weiner filtering process can be carried out on an image block whose average is not 0 by scaling integer transform coefficients.

Figures 7A through 7C are block diagrams of different types of approximated generalized Weiner filters in an apparatus for encoding moving images. More specifically, Figures 7A through 7C illustrate the structure of an encoding apparatus that processes an intra block. Figures 7A and 7B show that an intra block is encoded by carrying out filtering on the intra block in an integer transform domain and carrying out quantization (Q) and variable length coding (VLC) on the filtered intra block without inversely integer-transforming the filtered intra block.

In other words, Figures 7A and 7B show that filtering is completed by multiplying the integer transform coefficient by F(k, *1).* In the meantime, quantization is carried out by multiplying or dividing the integer transform coefficient by a certain value with reference to a quantization table. The filtering carried out by multiplying the integer transform coefficient by *F(k, 1)* and the quantization carried out by multiplying the integer transform coefficient by the certain value can be integrated into a single operation, as shown in Figure 7C.

As shown in Figure 8, the concepts of the present invention, illustrated in Figures 7A through 7C, can be directly applied to an occasion when an apparatus for encoding moving images processes an inter block as long as noise has already been removed from motion-compensated block information p(m, n).

A covariance value Ψ*(k,l)* is determined depending on whether an input image block is an inter block or an intra block. Therefore, F(k, *1)* of Figure 7 may be varied depending on whether the input image block is an inter block or an intra block.

Hereinafter, a method of obtaining an estimated covariance value of intra blocks or inter blocks, from each of which their average is subtracted, will be described in greater detail with reference to Equation (9) below. Supposing that *S* represents an N×N (where N = 4) block from which an average of the corresponding block has already been subtracted, a covariance matrix of the N×N block can be obtained using Equation (9).

$$\hat{C} = \frac{1}{2} \frac{N}{2trace(S^T S)} (S^T S + S S^T) \qquad \dots \quad (9)$$

Equation (9) has been disclosed by W. Niehsen and M. Brunig in "Covariance Analysis of Motion-compensated Frame Differences", IEEE Trans. Circ. Syst. for Video Technol., June 1999.

An estimated variance value can be obtained by applying Equation (9) to a variety of experimental images. In a case where an original image block is an intra block, an original image is divided into 4x4 blocks, and then a variance value of each of the 4x4 blocks is calculated. On the other hand, in a case where the original image block is an inter block, an estimated variance value is calculated by applying Equation (9) above to each image block that is determined as an inter block through a full search.

By using the estimated covariance value, the following equation is obtained: *R=E[y y^T]* . Thereafter, by carrying out integer transform on R, the following equation is obtained: Ψ=*ARA^{*T}.*

Hereinafter, a method of calculating $\dfrac{\sigma_n^2}{\sigma^2}$ of Equation (7) will be described.

In Equation (7), the noise variance value $\sigma_n^2$ can be obtained by using a noise estimator. Given that noise and original image pixels are random and independent variables, an estimated value $\hat{\sigma}^2$ of the variance $\sigma^2$ of an original image can be calculated using Equation (10) below.

$$\hat{\sigma}^2 = \max(\hat{\sigma}_z^2 - \hat{\sigma}_n^2,\, 0) \qquad \dots \ (10)$$

In Equation (10), $\hat{\sigma}_z^2$ represents an estimated variance value of each macroblock (MB). In a typical type of apparatus for encoding moving images, $\hat{\sigma}_z^2$ is calculated on a macroblock-by-macroblock basis. In the present exemplary embodiment, 4x4 blocks in the same macroblock are supposed to have the same variance value. Therefore, there is no need to perform additional calculations to obtain a variance value of each of the 4x4 blocks.

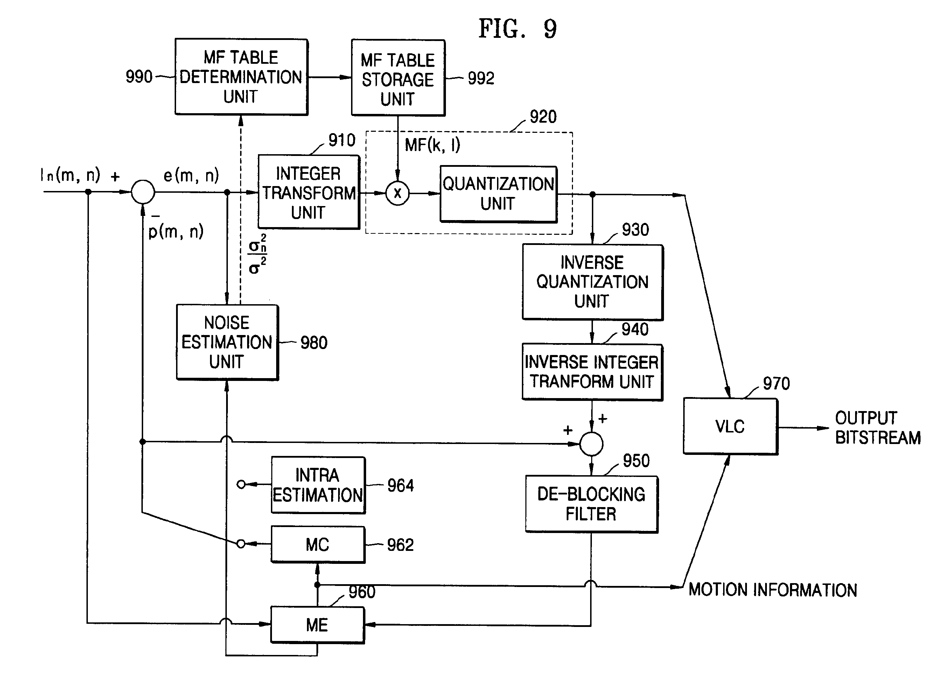

Figure 9 is a block diagram of an apparatus for encoding moving images according to an exemplary embodiment of the present invention that encodes an input image in consideration of the characteristics of the input image.

In the present exemplary embodiment, among the characteristics of the input image, a level of noise contained in the input image is adaptively reflected into a modified multiplication factor (MF) table.

Hereinafter, the structure and operation of the apparatus for encoding moving images according to an embodiment of the present invention will be described in greater detail with reference to Figure 9.

In addition to a conventional moving image encoder, the apparatus of Figure 9 further includes a noise estimation unit 980, an MF table (or a multiplication table) determination unit 990, an MF table storage unit 992, and a modified quantization unit 920. MF is a coefficient used for a JM Reference Software Encoder using an H.264-based integer transform to perform a quantization operation. The MF is used in table form and will be described later.

Since an integer transform unit 910, an inverse integer transform unit 940, a de-blocking filter 950, a motion estimation (ME) unit 960, a motion compensation (MC) unit 962, and an intra estimation unit 964 have the same functions as their respective counterparts of Figure 1, their descriptions will be omitted here.

The noise estimation unit 980 calculates $\dfrac{\sigma_n^2}{\sigma^2}$ using a differential image and data input from the ME unit 960 and transmits $\dfrac{\sigma_n^2}{\sigma^2}$ to the MF table determination unit 990.

The MF table determination unit 990 determines an MF table corresponding to a predetermined macroblock based on $\dfrac{\sigma_n^2}{\sigma^2}$ received from the noise estimation unit 980 and transmits index information corresponding to the determined MF table to the MF table storage unit 992. Alternatively, the index information is transmitted to a VLC 970.

A method of calculating $\dfrac{\sigma_n^2}{\sigma^2}$ using the noise estimation unit 980 and determining an MF table corresponding each macroblock based on $\dfrac{\sigma_n^2}{\sigma^2}$ received from the noise estimation unit 980 by using the MF table determination unit 992 will now be described in detail.

As described above with reference to Equation (8) and Figures 7 and 8, F(k, *1*) is determined by Equation (7). Once F(k, *1*) is determined, the integer transform coefficient V(k, *1*) of a 4x4 block is multiplied by *F(k, 1)*, and a result of the multiplication $\hat{W}$ (k,l) is quantized.

Unlike in MPEG2, in H.264, only a 4x4 integer transform is used in a main profile. In a high profile, the 4x4 integer transform or an 8x8 integer transform is used. In the present exemplary embodiment, only the main profile in H.

264, i.e., the 4x4 integer transform, will be described. However, the same method may be applied to the 8x8 integer transform in the high profile.

In the H.264 based method of encoding moving images, there is close correlation between integer transform and quantization as shown in Equation (11) below.

$$\hat{W}q(k,l) = round\left(V(k,l) \times \frac{PF}{Qstep}\right), \quad \ldots (11)$$

wherein *V(k,1)* is a position transform coefficient obtained by performing the 4x4 integer transform on *(k,1)*. In addition, a post-scaling factor (PF) is a value corresponding to a position of a coefficient derived from the integer transform to show the performance of the DCT. The PF denotes a coefficient transited from the integer transform toward quantization, and a value of the PF changes according to the position of the coefficient. Table 1 below shows values of a PF according to positions of a coefficient.

[Table 1]

| Position | PF |
|---|---|
| (0, 0), (2,0), (0,2), or (2,2) | A |
| (1,1), (1,3), (3,1), or (3,3) | b/4 |
| Others | ab/2 |

In Table 1, a=1/2 and $b = \sqrt{\dfrac{2}{5}}$

*Qstep* is a quantization factor according to QP as shown in Table 2.

[Table 2]

| QP | 0 | 1 | 2 | 3 | 4 | 5 | 6 | 7 | 8 | 9 | 10 | 11 | 12 | ... |
|---|---|---|---|---|---|---|---|---|---|---|---|---|---|---|
| Qstep | 0.625 | 0.6875 | 0.8125 | 0.875 | 1 | 1.125 | 1.25 | 1.375 | 1.625 | 1.75 | 2 | 2.25 | 2.5 | ... |
| QP | ... | 18 | ... | 24 | ... | 30 | ... | 36 | ... | 42 | ... | 48 | ... | 51 |
| QStep | | 5 | | 10 | | 20 | | 40 | | 80 | | 160 | | 224 |

As shown in Equation (11), in the quantization process, an integer transform coefficient is multiplied by a *PF,* and a value obtained as a result of the multiplication is divided by *Qstep.*

To remove the dividing operation from Equation (11), *PF/Qstep* may be converted into *MF/2^{qbits}* such that the quantization process can be performed using only multiplication and shift operations. Actually, the H.264 JM Reference Software Encoder performs quantization using an MF as shown in Equation (12).

$$\hat{W}q(k,l) = round\left(V(k,l) \times \frac{MF}{2^{qbits}}\right), \quad \ldots (12)$$

wherein qbits=15+floor (QP/6). The MF is an abbreviation for a multiplication factor and defined as in Table 3.

[Table 3]

| QP | Positions {0,0}.{2,0}.{2,2}.{0,2} | Positions {1,1}.{1,3}.{3,1}.{3,3} | Other positions |
|----|-----------------------------------|-----------------------------------|-----------------|
| 0  | 13107                             | 5243                              | 8066            |
| 1  | 11916                             | 4660                              | 7490            |
| 2  | 10082                             | 4194                              | 6554            |
| 3  | 9362                              | 3647                              | 5825            |
| 4  | 8192                              | 3355                              | 5243            |
| 5  | 7282                              | 2893                              | 4559            |

Table 3 shows values of first six QPs, and the values are repeated in units of 6 QPs. Equation (12) is implemented as in Equation (13).

$$\hat{W}q(k,l) = (|V(k,l)| \times MF + f)\gg qbits$$
$$sign(\hat{W}q(k,l)) = sign(V(k,l)) \quad , \quad \ldots (13)$$

wherein f denotes $2^{qbits-1}$.

As described above, the noise elimination process and the quantization process can be integrated into a single process. In other words, the noise elimination and quantization processes can be performed simultaneously by multiplying the filtering coefficient *F(k,l)* for noise reduction by an MF table at a position corresponding to the filtering coefficient *F(k,l).*

For example, a plurality of filtering coefficients F obtained using $\sigma_n^2$ and $\sigma_z^2$ are computed in advance, and then the calculated filtering coefficients F are multiplied by the MF tables to generate modified MF tables. The modified MF tables thus generated are stored in the MF storage unit 992.

As shown in Equation (7), *F(k, 1)* is determined by *S(k, 1)*, Ψ(*k, 1*), and $\frac{\sigma_n^2}{\sigma^2}$ . *S(k, 1)* is calculated using Equation (8), and Ψ(*k, 1*) is variably set depending on whether an input image is an inter block or an intra block. Therefore, there is only one variable left for determining *F(k, 1),* i.e., $\frac{\sigma_n^2}{\sigma^2}$ . In other words, if $\sigma_n^2$ and $\sigma_z^2$ are determined, $\frac{\sigma_n^2}{\sigma^2}$ can be calculated by Equation 10, and a modified MF table can be obtained by substituting $\frac{\sigma_n^2}{\sigma^2}$ into Equation (7).

In the present exemplary embodiments, five different estimates of $\dfrac{\sigma_n^2}{\sigma^2}$ and their respective modified MF tables are provided in the form of, for example, Table 3.

The MF table determination unit 990 quantizes $\dfrac{\sigma_n^2}{\sigma^2}$ obtained from the noise estimation unit 980. A result of the quantization is transmitted to the MF table storage unit 992 as index information of a quantization matrix corresponding to the predetermined macroblock. In a standard similar to the H.264 standard, the index information is also transmitted to the VLC 970.

For example, if quantization weight matrices stored in the MF table storage unit 992 are classified into five cases according to $\dfrac{\sigma_n^2}{\sigma^2}$, the quantization of $\dfrac{\sigma_n^2}{\sigma^2}$ is carried out in five levels, and index information of each of the five quantization weight matrices is set to 0, 1, 2, 3, or 4.

In the meantime, in an image with a lot of noise, $\dfrac{\sigma_n^2}{\sigma^2}$ especially for blocks having a small variance value is very large. When $\dfrac{\sigma_n^2}{\sigma^2}$ is very large, $F(k, 1)$ approaches 0, resulting in a severe blocking phenomenon. In order to prevent the blocking phenomenon, $T_{cutoff}$ is used, as shown in Equation (14) below.

$$\sigma_n^2 / \sigma^2 = \min(T_{cutoff}, \ \sigma_n^2 / \sigma^2) \qquad \dots \ (14)$$

In general, $T_{cutoff}$ has a value between 1 and 2.

The MF table storage unit 992 transmits an MF table value corresponding to the index information received from the MF table determination unit 990 to the modified quantization unit 920. In the case of a codec similar to H.264, the MF table storage unit 992 also transmits the MF table value to the inverse quantization unit 930.

The modified quantization unit 920 quantizes the predetermined macroblock of the input image, which was integer-transformed by the integer transform unit 910, by using the MF table value received from the MF table storage unit 992.

In the case of a codec similar to H.264, the inverse quantization unit 930 also inversely quantizes a predetermined macroblock of input image data by using the MF table value and performs inverse integer transformation on the inversely quantized macroblock.

The VLC 970 performs variable length coding on the input image data quantized by the modified quantization unit 920. In the case of a codec similar to H.264, the index information of the MF table corresponding to the macroblock input from the MF table determination unit 990 is inserted into a macroblock layer syntax.

In the present exemplary embodiment, an index of the MF table is inserted into the macroblock layer syntax and then transmitted. If there are ten MF tables stored in the MF table storage unit 992, 4-bit data is additionally required for each macroblock.

Adjacent macroblocks ordinarily have similar image characteristics, and there is ordinarily a correlation among their index values. Therefore, a difference between an index value of one macroblock and an index value of an adjacent macroblock may be used as index information. In a case where a single MF table is applied to an entire sequence, the amount of index information to be transmitted can be considerably reduced.

In the present exemplary embodiment, a plurality of MF tables stored in the MF table storage unit 992 are stored in a decoding unit as well. However, it may also be possible to use a plurality of MF tables transmitted to the decoding unit on a picture-by-picture basis using a picture extension header, or transmitted to the decoding unit on a sequence-by-sequence basis using a sequence extension header.

As described above, it is possible to remove noise from an input image and enhance the efficiency of encoding the input image by adaptively applying a quantization matrix to each macroblock in consideration of the level of noise contained in the input image.

In addition, it is possible for a user to arbitrarily determine new MF tables. In the present exemplary embodiment, noise removal has been described above as being performed on a Y component of an input image block in an integer domain. However, the noise removal can also be applied to a U or V component of the input image block.

$\Psi(k,l)$ is determined depending on whether an input image block is an inter block or an intra block. $\Psi(k,l)$ is obtained through a training process for a plurality of sequences. Unlike in MPEG 4, in H.264, even when the input image is an intra block, a differential image that was intra-predicted must go through the training process. Such a training process is performed to extract common $\Psi(k,l)$ .

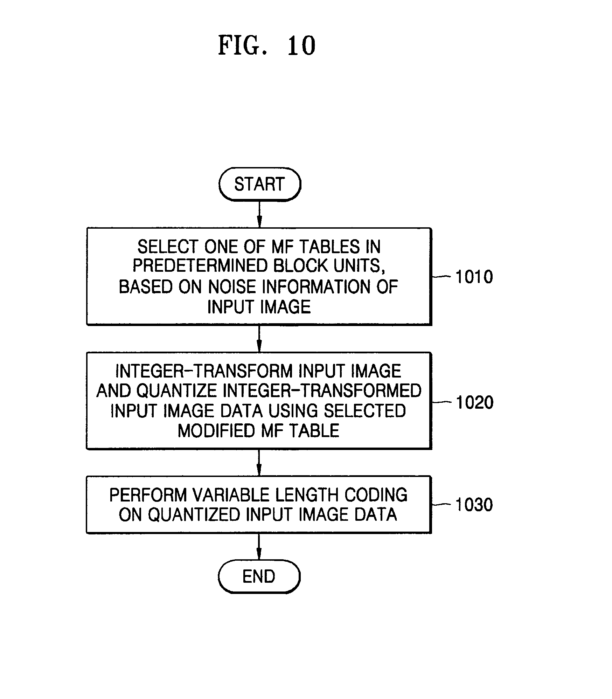

Figure 10 is a flowchart illustrating a method of encoding moving images according to an embodiment of the present invention. The method will now be described with additional reference to Figure 9.

In operation 1010, by using the MF table determination unit 990 and the MF table storage unit 992, one of the MF tables is selected in predetermined block units, based on noise information of an input image transmitted from the noise estimation unit 980.

In operation 1020, the input image is integer-transformed, and integer-transformed input image data is quantized using the modified MF table selected in operation 1010.

In operation 1030, VLC is performed on the quantized input image data, and index information indicating the MF table selected in operation 1010 is inserted into a macroblock header. In the present exemplary embodiment, the index information indicating the selected MF table is inserted into the macroblock header. However, the selected MF table may be inserted into parts other than the macroblock header.

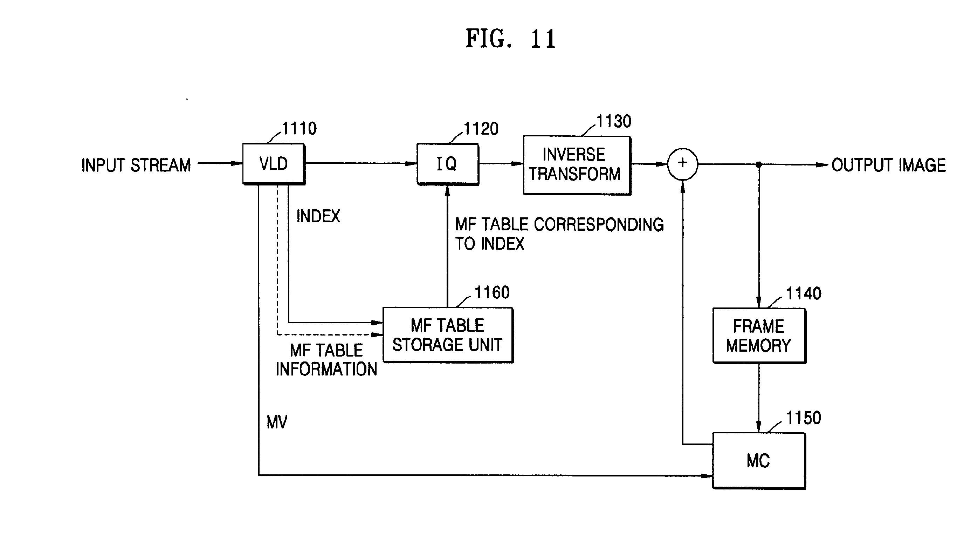

Figure 11 illustrates an apparatus for decoding moving images according to an embodiment of the present invention. The apparatus will be described, assuming that the apparatus adopts not the current H.264 standard but a standard similar to the H.264 standard, which adopts integer transform.

The apparatus includes an MF table storage unit 1160 and a modified inverse quantization unit 1120 in addition to elements of a conventional moving image decoder.

Since the inverse integer transform unit 1130, the frame memory 1140, and the motion compensation unit 1150 serve the same functions as their respective counterparts of the conventional decoder, their description will not be repeated here.

A variable length decoding (VLD) unit 1110 performs VLD on an input stream, extracts index information of an MF table corresponding to a predetermined macroblock from the macroblock layer syntax, and outputs the extracted index information to the MF table storage unit 1160.

The MF table storage unit 1160 outputs the MF table corresponding to the received index information to the modified inverse quantization unit 1120. Here, the MF table storage unit 1160 stores a plurality of MF tables, which are classified according to the characteristics of an input image processed by an encoding unit, for example, a noise variance value as a ratio between an input image variance value and the edge characteristics of the input image.

The MF tables stored in the MF table storage unit 1160 can be transmitted on a picture-by-picture basis using a picture extension header or transmitted to the decoding unit on a sequence-by-sequence basis using a sequence extension header. The MF tables are transmitted from the VLD unit 1110 to the MF table storage unit 1160, as marked by a dotted line in Figure 11.

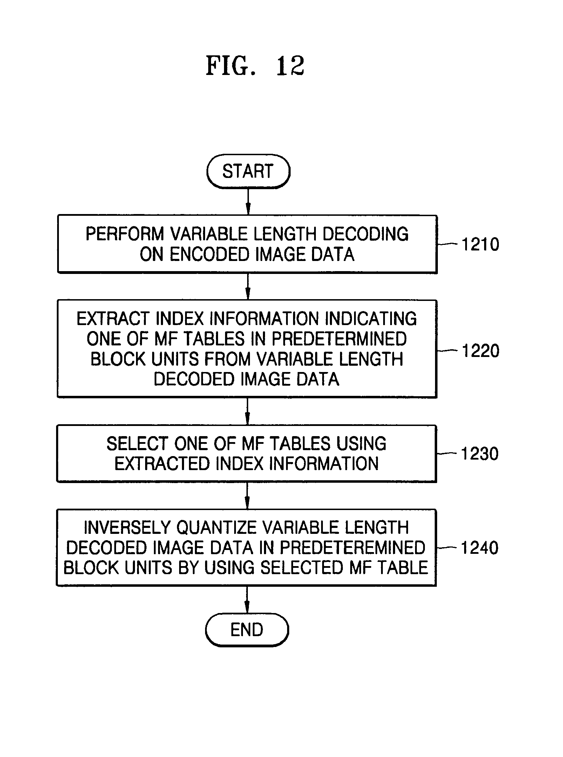

Figure 12 is a flowchart illustrating a method of decoding moving images according to an embodiment of the present invention.

In operation 1210, variable length decoding is performed on encoded input image data. In operation 1220, index information indicating one of the MF tables is extracted from the variable length decoded image data in predetermined block units.

In operation 1230, one of the MF tables is selected using the extracted index information. In operation 1240, the variable length decoded image data is inversely quantized in predetermined block units by using the selected MF table.

In the present exemplary embodiment, it is assumed that a plurality of MF tables are stored in a decoder in advance. Alternatively, the MF tables may be transmitted on a picture-by-picture basis using a picture extension header or transmitted to the decoder on a sequence-by-sequence basis using a sequence extension header.

As described above, in methods of encoding and decoding moving images according to exemplary embodiments of the present invention, an MF table is adaptively applied to each macroblock of an input image in consideration of noise information of the input image. Thus, it is possible to enhance the efficiency and performance of removing noise from the input image and encoding the input image without requiring additional memory or calculations.

While the present invention has been particularly shown and described with reference to exemplary embodiments thereof, it will be understood by those of ordinary skill in the art that various changes in form and details may be made therein without departing from the scope of the present invention as defined by the following claims. In particular, the present invention can be applied to different types of methods and apparatuses for encoding and decoding moving images, such as MPEG-1, MPEG-2, MPEG-4, H.26x, or other similar encoding and decoding methods and apparatuses know in the art.

The present invention can also be implemented as computer-readable code on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, carrier waves (such as data transmission through the Internet), and other computer-readable recording media know in the art.

The computer-readable recording medium can also be distributed over network-coupled computer systems so that the computer-readable code is stored and executed in a distributed fashion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of encoding moving images using a plurality of modified multiplication factor tables, the method comprising:

   selecting one of the plurality of modified multiplication factor tables in block units according to characteristics of an input image;
   integer-transforming the input image; and
   quantizing the input image which is integer-transformed, using the selected modified multiplication factor table.

2. The method of claim 1, wherein the plurality of modified multiplication factor tables are generated by multiplying multiplication factor tables by filtering coefficients dependent on the characteristics of the input image.

3. The method of claim 1 or 2, wherein the characteristics of the input image comprise noise or spatial complexity of the input image.

4. The method of claim 2, wherein multiplication factors of the multiplication factor table are generated by combining coefficients transited in a process of inducing a discrete cosine transform to an integer transform and quantization coefficients.

5. The method of claim 1, wherein the characteristics of the input image is noise information and the noise information is a ratio between a noise variance value and a variance value of the input image.

6. The method of claim 2, wherein the filtering coefficients are determined by a signal-to-noise ratio, a covariance matrix, and an average matrix.

7. The method of claim 2, wherein the filtering coefficients are determined depending on whether the block is an intra block or an inter block.

8. The method of claim 1, wherein the encoding complies with the H.264 standard.

9. The method of claim 1, wherein the plurality of multiplication factor tables are classified according to the characteristics of the input image.

10. The method of claim 1, wherein the selecting comprises:

    selecting one of the plurality of modified multiplication factor tables in the block units according to the noise information of the input image, and generating index information indicating the selected modified multiplication factor table in the block units; and

outputting the selected modified multiplication factor table in the block units according to the generated index information.

11. The method of claim 10, further comprising carrying out variable length decoding on the input image which is quantized,

wherein the block is a macroblock, and the carrying out variable length decoding comprises inserting the index information of the selected modified multiplication factor table into a macroblock layer syntax.

12. The method of claim 11, wherein in the carrying out variable length decoding , the index information is inserted into a sequence extension header or a picture extension header.

13. A method of decoding moving images using a plurality of modified multiplication factor tables, the method comprising:

carrying out variable length decoding on encoded image data;

extracting index information indicating one of the plurality of modified multiplication factor tables from the variable-length-decoded image data in block units;

selecting one of the plurality of modified multiplication factor tables based on the extracted index information; and

inversely quantizing the variable-length-decoded image data in the block units using the selected modified multiplication factor table.

14. The method of claim 13, wherein the plurality of modified multiplication factor tables are generated by multiplying multiplication factor tables by filtering coefficients dependent on the characteristics of the input image.

15. The method of claim 13, wherein the characteristics of the input image comprise noise or spatial complexity of the input image.

16. The method of claim 14, wherein multiplication factors of the multiplication factor table are generated by combining coefficients transited in a process of inducing a discrete cosine transform to an integer transform and quantization coefficients.

17. The method of claim 14, wherein the filtering coefficients are determined by a signal-to-noise ratio, a covariance matrix, and an average matrix.

18. The method of claim 14, wherein the filtering coefficients are determined depending on whether the block is an intra block or an inter block.

19. The method of claim 14, wherein the encoded image data was encoded using an encoding method complying with the H.264 standard.

20. The method of claim 13, wherein the index information is extracted from a macroblock layer syntax.

21. An apparatus for encoding moving images using a plurality of modified multiplication factor tables, the apparatus comprising:

a modified multiplication factor table determination unit (990) which selects one of the plurality of modified multiplication factor tables in block units according to characteristics of an input image;

an integer transform unit (910) which integer-transforms the input image; and

a quantization unit (920) which quantizes the input image which is integer-transformed using the selected modified multiplication factor table.

22. The apparatus of claim 21, wherein the plurality of modified multiplication factor tables are generated by multiplying multiplication factor tables by filtering coefficients dependent on the characteristics of the input image.

23. The apparatus of claim 21, wherein the characteristics of the input image comprise noise or spatial complexity of the input image.

24. The apparatus of claim 22, wherein multiplication factors of the multiplication factor table are generated by combining coefficients transited in a process of inducing a discrete cosine transform to an integer transform and quantization coefficients.

25. The apparatus of claim 22, wherein the filtering coefficients are determined by a signal-to-noise ratio, a covariance matrix, and an average matrix.

26. The apparatus of claim 22, wherein the filtering coefficients are determined depending on whether the block is an intra block or an inter block.

27. The apparatus of any of claims 21 to 26, the apparatus complying with the H.264 standard.

28. The apparatus of claim 21, further comprising a variable length encoding unit (970) which carries out variable length encoding on the quantized input image and inserts index information of the selected modified multiplication factor table into a macroblock layer syntax.

29. An apparatus for decoding moving images using a plurality of modified multiplication factor tables, the apparatus comprising:

a variable length decoding unit (1110) which carries out variable length decoding on encoded image data, and extracts index information indicating one of the plurality of modified multiplication factor tables from the variable-length-decoded image data in block units;
a modified multiplication factor table storage unit (1160) which stores the plurality of modified multiplication factor tables, and selects one of the plurality of modified multiplication factor tables based on the extracted index information; and
an inverse quantization unit (1120) which inversely quantizes the variable-length-decoded image data in the predetermined block units using the selected modified multiplication factor table.

30. The apparatus of claim 29, wherein the plurality of modified multiplication factor tables are generated by multiplying multiplication factor tables by filtering coefficients dependent on the characteristics of the input image.

31. The apparatus of claim 29, wherein the characteristics of the input image comprise noise or spatial complexity of the input image.

32. The apparatus of claim 30, wherein multiplication factors of the multiplication factor table are generated by combining coefficients transited in a process of inducing a discrete cosine transform to an integer transform and quantization coefficients.

33. The apparatus of any of claims 29 to 32, wherein the encoded image data was encoded using an encoding method according to the H.264 standard.

34. A computer-readable recording medium on which a program for executing a method of encoding moving images using a plurality of modified multiplication factor tables is recorded, according to the method of any of claims 1 to 12.

35. A computer-readable recording medium on which a program for executing a method of decoding moving images using a plurality of modified multiplication factor tables is recorded, the method according to any of claims 13 to 20.

# FIG. 1 (PRIOR ART)

```
                              110                      120
                        ┌──────────────┐      ┌──────────────┐
INPUT IMAGE ──────────▶ │ PRETREATMENT │ ───▶ │ MOVING IMAGE │ ───▶  OUTPUT
                        │  PROCESSOR   │      │   ENCODER    │       BITSTREAM
                        └──────────────┘      └──────────────┘
```

# FIG. 2 (PRIOR ART)

# FIG. 3 (PRIOR ART)

MASK1  MASK2  MASK3  MASK4

MASK5  MASK6  MASK7  MASK8

# FIG. 4 (PRIOR ART)

```
                    410                    430
              ┌──────────┐          ┌──────────────┐
              │  MOTION  │◄─────────│ FRAME MEMORY │
              │ DETECTOR │          └──────────────┘
              └──────────┘
                    │        420
                    ▼
              ┌────────────────┐
INPUT IMAGE ──┤    TEMPORAL    │──────────────►  FILTERED
              │RECURSIVE FILTER│                 OUTPUT IMAGE
              └────────────────┘
```

FIG. 5

$$\hat{P}(k,l) \equiv \frac{1}{1 + \frac{\sigma_n^2}{\sigma^2} \cdot \psi(k,l)^{-1}}$$

EP 1 679 901 A2

FIG. 6

EP 1 679 901 A2

v(m,n) → INTEGER TRANSFORM → V(k,l)

V(k,l) + Z(k,l) ⊗ $\hat{Y}(k,l)$ + $\hat{W}(k,l)$

−

$\overline{P}(k,l)$

$\hat{M}(k,l)$

⊗ S(k,l)

+

INVERSE INTEGER TRANSFORM → $\hat{w}(m,n)$

V(k,l) ⊗ $\hat{W}(k,l)$

F(k,l)

## FIG. 7A

$v(m,n) \rightarrow$ PRETREATMENT $\xrightarrow{\hat{w}(m,n)}$ INTEGER TRANSFORM $\xrightarrow{\hat{W}(k,l)}$ Q $\xrightarrow{\hat{W}_q(k,l)}$ VLC $\xrightarrow{\text{BIT STREAM}}$

## FIG. 7B

$v(m,n) \rightarrow$ INTEGER TRANSFORM $\xrightarrow{Y(k,l)}$ ⓧ $\rightarrow$ INVERSE INTEGER TRANSFORM $\xrightarrow{\hat{w}(m,n)}$ DCT $\xrightarrow{\hat{W}(k,l)}$ Q $\xrightarrow{\hat{W}_q(k,l)}$ VLC $\xrightarrow{\text{BIT STREAM}}$

$F(k,l)$

## FIG. 7C

$v(m,n) \rightarrow$ INTEGER TRANSFORM $\xrightarrow{V(k,l)}$ ⓧ $\xrightarrow{\hat{W}(k,l)}$ Q $\xrightarrow{\hat{W}_q(k,l)}$ VLC $\xrightarrow{\text{BIT STREAM}}$

$F(k,l)$

EP 1 679 901 A2

# FIG. 8

EP 1 679 901 A2

## FIG. 9

EP 1 679 901 A2

# FIG. 10

START

SELECT ONE OF MF TABLES IN
PREDETERMINED BLOCK UNITS,
BASED ON NOISE INFORMATION OF
INPUT IMAGE
— 1010

INTEGER–TRANSFORM INPUT IMAGE
AND QUANTIZE INTEGER–TRANSFORMED
INPUT IMAGE DATA USING SELECTED
MODIFIED MF TABLE
— 1020

PERFORM VARIABLE LENGTH CODING
ON QUANTIZED INPUT IMAGE DATA
— 1030

END

# FIG. 11

INPUT STREAM → VLD (1110) → IQ (1120) → INVERSE TRANSFORM (1130) → (+) → OUTPUT IMAGE

INDEX

MF TABLE CORRESPONDING TO INDEX

MF TABLE STORAGE UNIT (1160)

MF TABLE INFORMATION

FRAME MEMORY (1140)

MV

MC (1150)

# FIG. 12

START

PERFORM VARIABLE LENGTH DECODING ON ENCODED IMAGE DATA — 1210

EXTRACT INDEX INFORMATION INDICATING ONE OF MF TABLES IN PREDETERMINED BLOCK UNITS FROM VARIABLE LENGTH DECODED IMAGE DATA — 1220

SELECT ONE OF MF TABLES USING EXTRACTED INDEX INFORMATION — 1230

INVERSELY QUANTIZE VARIABLE LENGTH DECODED IMAGE DATA IN PREDETEREMINED BLOCK UNITS BY USING SELECTED MF TABLE — 1240

END